# EUROPÄISCHE PATENTSCHRIFT

(11) **EP 4 402 375 B1**
(45) Veröffentlichungstag und Bekanntmachung des Hinweises auf die Patenterteilung: **08.10.2025**
(21) Anmeldenummer: 22769937.8
(22) Anmeldetag: 29.08.2022
(51) Int. Cl.: F04C 29/02

(54) **KOMPRESSORÖLAUFNAHMEVORRICHTUNG UND KOMPRESSORSYSTEM MIT EINER SOLCHEN KOMPRESSORÖLAUFNAHMEVORRICHTUNG**
COMPRESSOR-OIL RECEIVING DEVICE AND COMPRESSOR SYSTEM HAVING A COMPRESSOR-OIL RECEIVING DEVICE OF THIS TYPE
DISPOSITIF DE RÉCEPTION D'HUILE DE COMPRESSEUR ET SYSTÈME DE COMPRESSEUR AYANT UN TEL DISPOSITIF DE RÉCEPTION D'HUILE DE COMPRESSEUR

(30) Priorität: 15.09.2021 DE 102021210221
(43) Veröffentlichungstag der Anmeldung: 24.07.2024
(73) Patentinhaber: KNORR-BREMSE Systeme für Schienenfahrzeuge GmbH, 80809 München (DE)
(72) Erfinder: KRAMLICH, Adrian, 80807 München (DE); SPRINGL, Cornelia, 83233 Bernau am Chiemsee (DE); KIPP, Thomas, 81547 München (DE); KUHN, Wolfgang, 80807 München (DE); GRAW, Johannes, 80335 München (DE)
(86) Internationale Anmeldenummer: PCT/EP2022/073951
(87) Internationale Veröffentlichungsnummer: WO 2023/041314

(56) Entgegenhaltungen:
- EP-A1- 0 030 619
- US-A- 4 475 876
- US-A- 4 478 054

## Beschreibung

Die vorliegende Erfindung betrifft eine Kompressorölaufnahmevorrichtung für ein Kompressorsystem zur Befüllung mit einem Kompressoröl zur Weiterleitung in das Kompressorsystem sowie ein Kompressorsystem mit einer solchen Kompressorölaufnahmevorrichtung.

Je nach Art des Kompressors, wie beispielsweise bei ölgeschmierten Schraubenkompressoren, erfolgt eine Schmierung und/oder Kühlung von Komponente des Kompressorsystems durch ein Kompressoröl. Bei der Wartung wird der Ölstand regelmäßig geprüft und gegebenenfalls neues Kompressoröl nachgefüllt. Hierzu wird das Kompressoröl über eine Öleinfüllöffnung in ein Aufnahmevolumen gefüllt. Das Aufnahmevolumen ist dabei größer als der für den Verbrauch vorgesehene maximale Ölstand. Wird in das Aufnahmevolumen mehr Kompressoröl eingefüllt, als dies für den maximalen Ölstand vorgesehen ist, kann es zu einer Überfüllung kommen, was den Betrieb stören oder Komponenten beschädigen kann.

Beispielsweise betrifft die US 4 478 054 A einen Schraubenkompressor für ein Kühlsystem mit geschlossenem Kreislauf, wie z. B. eine Klimaanlage für einen Bus oder ein ähnliches Fahrzeug. Der Schraubenkompressor ist mit einem Kondensator und einem Verdampfer in Reihe geschaltet, wobei sich der Verdampfer in einer erhöhten Position relativ zum Verdichter befindet, und verwendet ein verdampfbares Kältemittel, das mit einem Schmieröl mischbar ist, das zur Schmierung der beweglichen Komponenten des Schraubenverdichters verwendet wird. Die Schraubenrotoren sind in parallelen, sich kreuzenden Bohrungen im Verdichtergehäuse montiert. Ein Schieber liegt unter den ineinandergreifenden Rotoren und bildet einen Teil der Schraubenverdichterhülle, wobei die Rotoren zu einer Ansaugöffnung führen, die mit der Auslassseite des Verdampfers oberhalb der Rotoren verbunden ist. Ein Hochdruckauslass an einem Ende der ineinandergreifenden Rotoren führt zu einer Hilfskammer, in der sich ein Entlastungszylinder befindet, der den Schieber antreibt und der oben in einen Gehäuseauslass mündet, der zum Verflüssiger führt. In der Hilfskammer ist oberhalb des Entlastungszylinders ein Ölabscheider angeordnet. Ein Ölablasskanal führt von der Hilfskammer zu einer übergroßen Ölwanne im Gehäuse unter den Rotoren. Der Schieber gleitet in einer Aussparung innerhalb des Gehäuses unter den Rotoren. Auf der Saugseite der Aussparung führt ein weiterer Ablasskanal durch ein Ablass-Rückschlagventil zum Sumpf.

Die US 4 475 876 A betrifft ein System zum Spülen eines Schmieröls aus Ölverbindungsleitungen und einem Kühler eines Ölzirkulationssystems für einen Schraubenkompressor, wenn der Kompressor abgeschaltet ist, wobei das Schmieröl in einen Behälter gepresst wird, der innerhalb eines beheizten Gehäuses angeordnet ist, so dass beim Wiederanfahren des Kompressors bei extrem kaltem Wetter kein kaltes, zähes Öl in den Ölverbindungsleitungen und dem Kühler vorhanden ist, wodurch Verzögerungen beim Anfahren des Kompressors vermieden werden.

Die EP 0 030 619 A1 betrifft einen Rotorverdichter, insbesondere Schraubenverdichter mit Schmiermittelzufuhr zu und Schmiermitteldrainage von den Wellenlagern, wobei jede Rotorwelle zwischen dem Wellenlager und dem den Rotor aufnehmenden Arbeitsraum des Verdichters von einem ringförmigen Drainageraum zum Abführen der Schmiermittel- und Gasleckage und von einer die Welle abdichtenden Dichtungsanordnung umgeben ist, wobei die Drainageräume über Drainageöffnungen mit geschlossenen, unter im Wesentlichen den Ansaugdruck des Verdichters stehenden Auffangräumen verbunden sind, aus denen eine Gasrückführung in die Ansaugseite oder den Arbeitsraum des Verdichters, und eine Schmiermittelrückführung in den Schmiermittelkreislauf vorgesehen ist. Zwischen jedem Drainageraum und dem Arbeitsraum des Verdichters ist ein kurzes Dichtelement angeordnet. Die Auffangräume neben den Lagern, die auf der dem Arbeitsraum abgewandten Seite liegen, sind zum Auffangen auch des nach dieser Seite austretenden Schmiermittels angeordnet. Nach einer Ausführungsform sind die Auffangräume oder ein sie verbindender Kanal über eine wahlweise verschließbare Öffnung mit einem Abscheidebehälter verbunden. Der Gasraum dieses Abscheidebehälters ist über eine Schmiermittelleitung einem Schmiermittelkreislauf angeschlossen. An der Druckseite des Verdichters ist ein weiterer Abscheidebehälter für vom Gasstrom mit geführte Schmiermittel angeordnet, der mit dem ersten Abscheidebehälter über eine Verbindungsleitung mit einem mittels Niveauschalter betätigbaren Ventil verbunden ist.

In Anbetracht der vorstehenden Ausführungen liegt der vorliegenden Erfindung die Aufgabe zugrunde, eine Kompressorölaufnahmevorrichtung für ein Kompressorsystem zur Befüllung mit einem Kompressoröl zur Weiterleitung in das Kompressorsystem sowie ein Kompressorsystem mit einer solchen Kompressorölaufnahmevorrichtung bereitzustellen, durch die bzw. das das Risiko einer Überfüllung eines Aufnahmevolumens für ein Kompressoröl zumindest reduziert werden kann.

Die Aufgabe wird durch eine Kompressorölaufnahmevorrichtung sowie ein Kompressorsystem mit einer solchen Kompressorölaufnahmevorrichtung gemäß den nebengeordneten Ansprüchen gelöst. Vorteilhafte Weiterbildungen der Erfindung sind in den abhängigen Ansprüchen enthalten.

Erfindungsgemäß weist eine Kompressorölaufnahmevorrichtung für ein Kompressorsystem zur Befüllung mit einem Kompressoröl zur Weiterleitung in das Kompressorsystem ein Gehäuse, das ein Aufnahmevolumen für das Kompressoröl ausbildet, und einen Öleinfüllstutzen mit einer Einfüllöffnung auf einer dem Aufnahmevolumen abgewandten Seite und einer Auslassöffnung auf einer dem Aufnahmevolumen zugewandten Seite auf. Der Öleinfüllstutzen bildet eine Gehäuseöffnung zum Befüllen des Aufnahmevolumens mit dem Kompressoröl aus und die Auslassöffnung ist derart angeordnet, dass durch Befüllen des Aufnahmevolumens ein vom Gehäuse einerseits und dem eingefüllten Kompressoröl andererseits eingeschlossenes Luftvolumen im Aufnahmevolumen ausbildbar ist.

Eine Überfüllung des Aufnahmevolumens wird somit dadurch verhindert, dass das von dem Gehäuse einerseits und dem eingefüllten Kompressoröl andererseits eingeschlossene Luftvolumen im Aufnahmevolumen ein Luftpolster ausbildet, das die Befüllung des Ausnahmevolumens begrenzt.

Der Öleinfüllstutzen kann dabei durch eine Öffnung im Gehäuse gebildet werden, wobei die Einfüllöffnung durch eine dem Aufnahmevolumen abgewandte Gehäusewandung und die Auslassöffnung durch eine dem Aufnahmevolumen zugewandte Gehäusewandung ausgebildet wird. Die Erstreckung des Öleinfüllstutzens senkrecht zu den Öffnungsflächen der Einfüllöffnung und der Auslassöffnung entspricht somit der Dicke der Gehäusewandung in diesem Bereich. Bevorzugt weist der Öleinfüllstutzen jedoch eine größere Erstreckung in einer Richtung senkrecht zu den Öffnungsflächen auf, so dass das Kompressoröl bei Erreichen der Aufnahmebegrenzung durch die eingeschlossene Luft nicht gleich aus dem Öleinfüllstutzen auf einer dem Aufnahmevolumen abgewandten Seite ausläuft.

Die Auslassöffnung des Öleinfüllstutzens kann derart angeordnet sein, dass die Öffnungsfläche der Auslassöffnung der Pegelfläche des in das Aufnahmevolumen eingefüllten oder einzufüllenden Kompressoröls zugewandt, insbesondere im Wesentlichen parallel dazu, angeordnet ist. Alternativ kann sich die Auslassöffnung auch in Richtung der Steighöhe des Kompressoröls erstrecken.

In einer Ausgestaltung erstreckt sich der Öleinfüllstutzen zumindest teilweise in das eingeschlossene Luftvolumen hinein.

Eine vorgesehene Erstreckung des Öleinfüllstutzens kann somit bei verringerter Störkontur durch den Öleinfüllstutzen auf einer dem Aufnahmevolumen abgewandten Seite des Gehäuses erreicht werden. Insbesondere wenn die Auslassöffnung des Öleinfüllstutzens der Pegelfläche des in das Aufnahmevolumen eingefüllten oder einzufüllenden Kompressoröls gegenüberliegt, kann das vom Gehäuse einerseits und dem eingefüllten Kompressoröl andererseits eingeschlossene Luftvolumen im Aufnahmevolumen in einfacher Weise zwischen der Auslassöffnung und einem sich an die Auslassöffnung in Richtung der Steighöhe des Kompressoröls anschließenden Gehäusebereich ausgebildet werden. Das Gehäuse kann somit auch in einfacher Weise über die Einführung eines entsprechenden Öleinfüllstutzens nachgerüstet werden.

Insbesondere sind die Einfüllöffnung und die Auslassöffnung in Richtung einer Steighöhe des Kompressoröls im Aufnahmevolumen in unterschiedlichen Höhen angeordnet und der Abstand der Einfüllöffnung zur jeweiligen Pegelhöhe des Kompressoröls im Aufnahmevolumen ist zumindest bis zum Erreichen eines vorgesehenen maximalen Ölstands größer als der Abstand der Auslassöffnung zu dieser jeweiligen Pegelhöhe.

In Richtung der Schwerkraft betrachtet liegt die Einfüllöffnung somit oberhalb der Auslassöffnung. Der Einfüllvorgang erfordert somit keine weiteren Hilfsmittel, wie Pumpen oder dergleichen. Insbesondere kann durch eine entsprechende Ausrichtung auch weiterhin Luft entweichen, bis die Auslassöffnung vollständig durch den Pegelstand des Kompressoröls im Aufnahmevolumen überdeckt ist. Mit der Überdeckung der Auslassöffnung kann dann das eingeschlossene Luftvolumen im Aufnahmevolumen ausgebildet werden.

Gemäß einer Ausgestaltung korrespondiert die Position der Auslassöffnung zu dem maximalen Ölstand.

Der maximale Ölstand bezieht sich auf den für einen jeweiligen Kompressor bzw. ein jeweiliges Kompressorsystem und/oder den jeweiligen Betrieb vorgesehenen maximalen Ölstand, um einen störungsfreien Betrieb zu unterstützen. Entsprechend kann der vorgesehene maximale Ölstand durch die Anordnung der Auslassöffnung in Bezug auf das Gehäuse direkt vorgegeben werden. Mit anderen Worten definiert die Anordnung der Auslassöffnung des Öleinfüllstutzens nicht nur ein maximales Einfüllvolumen, sondern konkret den vorgesehenen maximalen Ölstand.

Gemäß einer Weiterbildung die Position der Auslassöffnung einstellbar ist.

Entsprechend kann auch der maximale Ölstand bzw. das maximale Einfüllvolumen für das Kompressoröl angepasst werden. Beispielsweise kann das Gehäuse mehrere Aufnahmen für den Öleinfüllstutzen aufweisen, so dass die Auslassöffnung an unterschiedlichen Positionen anordenbar ist. Jeweils nicht vorgesehene Aufnahmen können beispielsweise über einen Blindstopfen verschlossen werden.

Insbesondere ist der Öleinfüllstutzen zumindest in einem Bewegungsanteil in Richtung der Steighöhe des Kompressoröls im Aufnahmevolumen bewegbar.

Beispielweise kann der Öleinfüllstutzen in das Gehäuse einschraubbar sein, so dass die über die Einschraubtiefe die Position der Auslassöffnung im Aufnahmevolumen des Gehäuses der maximale Ölstand oder ein maximales Einfüllvolumen vorgebbar ist. Alternativ oder ergänzend kann der Öleinfüllstutzen auch um eine Achse senkrecht zu seiner Erstreckungsrichtung von der Einfüllöffnung zur Auslassöffnung und parallel zur Pegelfläche des Kompressoröls drehbar gelagert sein, um in Richtung der Steighöhe des Kompressoröls bewegbar zu sein. Ein solcher Drehpunkt liegt bevorzugt im Wesentlichen in der Höhe der Aufnahme des Öleinfüllstutzens im Gehäuse, um zum Beispiel den Abdichtungsaufwand gering zu halten, um das eingeschlossene Luftvolumen zu gewährleisten.

In einer Weiterbildung weist der Öleinfüllstutzen eine Positionsanzeigevorrichtung auf, die dazu konfiguriert ist, eine Position der Auslassöffnung anzuzeigen.

Die Positionsanzeigevorrichtung kann eine visuelle, akustische und/oder anderweitige Signal- bzw. Indikationsvorrichtung sein, die eine Angabe und/oder eine Rückschlussmöglichkeit auf eine Position der Auslassöffnung und/oder ein maximales Einfüllvolumen, insbesondere einen maximalen Ölstand, erlaubt. Beispielsweise kann zumindest ein Abstandssensor an der Auslassöffnung vorgesehen sein, der den Abstand zwischen der Auslassöffnung und einer in Steighöhe des Kompressoröls gegenüberliegenden Gehäusewandung oder einem anderweitigen Referenzpunkt detektiert. Der Abstand kann jeweils analog, also beispielsweise als jeweiliger Absolutwert, oder hinsichtlich vorgegebener Soll- oder Grenzwerte digital, d.h. Erreichung des Soll- oder Grenzwerts oder Abweichung hierzu, angezeigt werden. Die Anzeige kann optisch durch ein Display und/oder eine Signalleuchte und/oder akustisch durch einen Signalton, beispielsweise je nach Abstand mit unterschiedlicher Frequenz, erfolgen. Es kann alternativ oder ergänzend auch eine signaltechnische Anbindung einer Sperreinrichtung vorgesehen werden, die bei unzureichender Position der Auslassöffnung eine Sperrung der Einfüllung über den Öleinfüllstutzen vornimmt, diesen also beispielweise verschließt, und erst in einem zulässigen Positionsbereich wieder freigibt.

Insbesondere steht die Einfüllöffnung zumindest bis zum Erreichen einer vorbestimmten Bewegungstiefe des Ölleinfüllstutzens in das Aufnahmevolumen hinein über eine dem Aufnahmevolumen abgewandte Seite des Gehäuses vor und weist in diesem vorstehenden Bereich eine Skalierung als Positionsanzeigevorrichtung auf.

Die Skalierung ist somit von außen ablesbar und erlaubt eine einfache Kontrolle der Position der Auslassöffnung des Öleinfüllstutzens. Die Skalierung kann kontinuierlich oder auch in vorbestimmten Stufen vorgesehen sein. Die Skalierung kann beispielsweise direkt eine Einschraubtiefe und somit eine dazu korrespondierende Positionsänderung anzeigen oder auch direkt ein auf das jeweilige Gehäuse bzw. Aufnahmevolumen abgestimmtes Einfüllvolumen anzeigen. Die Skalierung kann auch mehrere Skalen umfassen, so dass der Öleinfüllstutzen für unterschiedliche Gehäuse bzw. Aufnahmevolumen unterschiedlicher Kompressorsysteme einsetzbar ist.

In einer Ausgestaltung weist die Kompressorölaufnahmevorrichtung einen Füllstandsanzeiger auf, der zumindest einen minimalen Ölstand und/oder den maximalen Ölstand anzeigt.

Der Füllstandsanzeiger kann vergleichbar zur Positionsanzeigevorrichtung für die Auslassöffnung des Öleinfüllstutzens einen Füllstand in optischer, akustischer und/oder anderweitiger signaltechnischer Art indizieren. Beispielsweise kann ein Schwimmer vorgesehen werden, der bei Erreichen des vorgesehenen minimalen und/oder maximalen Ölstands einen entsprechenden Schalter schaltet. Das Schalten des Schalters kann dann wiederum in ein optisches und/oder akustisches Signal umgewandelt werden. Alternativ oder ergänzend kann ein Abstandssensor eingesetzt werden, der den Abstand zu einer Pegelfläche in Richtung der Steighöhe des Kompressoröls im Aufnahmevolumen oder zu einem hierzu korrespondierenden Schwimmkörper detektiert. Die akustische und/oder visuelle Anzeige des Füllstands, insbesondere zumindest des minimalen und/oder maximalen Ölstands, kann auch hier analog oder digital erfolgen. Ebenso kann der Füllstandsanzeiger bei signaltechnischer Anbindung an eine Sperreinrichtung bei Detektion des maximalen Ölstands eine weitere Öleinfüllung über den Öleinfüllstutzen sperren und/oder eine Abpumpvorrichtung zur Abführung von überschüssigem Kompressoröl aktivieren.

Insbesondere ist der Füllstandsanzeiger als zumindest ein Ölschauglas im Gehäuse ausgebildet, das sich zumindest im Bereich des minimalen Ölstands und/oder des maximalen Ölstands in Richtung der Steighöhe des Kompressoröls im Aufnahmevolumen erstreckt.

Über das Ölschauglas kann der minimale und/oder maximale Ölstand in einfacher Weise direkt von außen abgelesen werden. Insbesondere erstreckt sich das Ölschauglas in Richtung der Steighöhe des Kompressoröls über den gesamten Bereich vom minimalen Ölstand bis zum maximalen Ölstand. Der Beginn des Ölschauglases in Richtung der Schwerkraft nach unten weisend korrespondiert dabei beispielsweise mit dem minimalen Ölstand und das Ende des Ölschauglases in Richtung der Schwerkraft nach oben weisend korrespondiert zum maximalen Ölstand.

Gemäß einer Weiterbildung ist das Ölschauglas derart angeordnet und/oder dimensioniert, dass über das Ölschauglas auch die Position der Auslassöffnung des Druckstutzens im Aufnahmevolumen erkennbar ist.

Das Ölschauglas ist somit sowohl als Füllstandsanzeiger für das Kompressoröl im Aufnahmevolumen als auch als Positionsanzeigevorrichtung für die Auslassöffnung des Druckstutzens einsetzbar. Insbesondere kann hierüber auch eine Undichtigkeit im Gehäuse erkannt werden, wenn der Pegel des Kompressoröls entgegen einer vorgesehenen Ausgestaltung über die Auslassöffnung des Öleinfüllstutzens weiter ansteigt.

In einer Ausgestaltung weist das Ölschauglas und/oder ein daran angrenzender Bereich des Gehäuses eine Skalierung auf.

Die Skalierung umfasst bevorzugt zumindest den minimalen und/oder maximalen Ölstand. Bevorzugt erstreckt sich das Ölschauglas mit entsprechender Skalierung in Steighöhe des Pegels des Kompressoröls über den minimalen und maximalen Ölstand hinaus, um die Pegellinie gerade im Bereich des minimalen und maximalen Ölstands besser beobachten zu können.

Sofern die Skalierung auf dem Ölschauglas vorgesehen ist, kann die Skalierung in einfacher Weise durch Austausch des Ölschauglases an unterschiedliche Verhältnisse und/oder Vorgaben angepasst werden.

In einem weiteren Aspekt betrifft die vorliegende Erfindung ein Kompressorsystem mit einer vorstehend beschriebenen Kompressorölaufnahmevorrichtung, wobei das Aufnahmevolumen für das Kompressoröl zumindest teilweise durch einen Ölsumpf des Kompressorsystems ausgebildet wird.

Die Kompressorölaufnahmevorrichtung kann somit direkt in bereits vorhandenen Arealen des Kompressorsystems verbaut werden, wodurch eine kompakte Bauweise ermöglicht wird. Insbesondere ist der Ölsumpf des Kompressorsystems durch einen entsprechenden Öleinfüllstutzen in einfacher Weise nachrüstbar.

In einer Ausgestaltung weist das Kompressorsystem einen Schraubenkompressor auf.

Der Schraubenkompressor ist insbesondere ein ölgeschmierter Schraubenkompressor.

Weitere Ausgestaltungen und Vorteile des Kompressorsystems ergeben sich analog zu den Ausführungen der möglichen Ausgestaltungen und Vorteile der Kompressorölaufnahmevorrichtung. Entsprechende Merkmale sind somit direkt auch bei Verwendung der Kompressorölaufnahmevorrichtung auf das Kompressorsystem übertragbar.

Im Folgenden wird die Erfindung anhand von Ausführungsbeispielen unter Bezugnahme auf die beigefügten Figuren näher erläutert. Die Figuren zeigen im Einzelnen:
**Figur 1** eine schematische Querschnittsdarstellung einer Kompressorölaufnahmevorrichtung gemäß einem exemplarischen Stand der Technik;
**Figur 2** eine schematische Querschnittsdarstellung einer Kompressorölaufnahmevorrichtung gemäß einer ersten exemplarischen Ausführungsform der vorliegenden Erfindung; und
**Figur 3** eine schematische Querschnittsdarstellung einer Kompressorölaufnahmevorrichtung gemäß einer zweiten exemplarischen Ausführungsform der vorliegenden Erfindung.

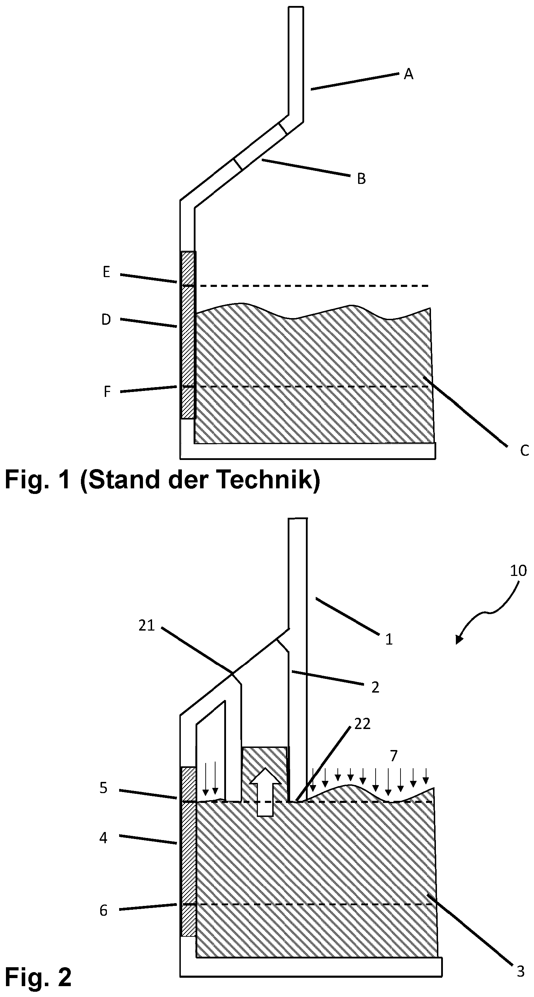

**Figur 1** zeigt eine schematische Querschnittsdarstellung einer Kompressorölaufnahmevorrichtung gemäß einem exemplarischen Stand der Technik. Die Kompressorölaufnahmevorrichtung weist ein Kompressorgehäuse A auf, das ein Aufnahmevolumen für ein Kompressoröl C ausbildet. In einem in Richtung der Schwerkraft im anwendungsgerechten Gebrauch oberen Bereich des Gehäuses ist eine Gehäuseöffnung als Öleinfüllöffnung B ausgebildet, über die das Kompressoröl C in das Aufnahmevolumen des Kompressorgehäuses einfüllbar ist. Die Ölleinfüllöffnung B ist dabei im anwendungsgerechten Gebrauch des Kompressors in Richtung der Schwerkraft oberhalb eines maximalen Ölstands E angeordnet. Entsprechend kann Kompressoröl auch über den maximalen Ölstand E hinaus in das Aufnahmevolumen eingefüllt werden. Eine über den maximalen Ölstand E hinausgehende Einfüllmenge kann den Betrieb des Kompressors stören. Zur Kontrolle des Pegels des Kompressoröls C im Aufnahmevolumen des Kompressorgehäuses A weist das Kompressorgehäuse A ein Ölschauglas D als Füllstandsanzeiger auf, das eine Skalierung aufweist, die zumindest einen minimalen Ölstand F als auch einen maximalen Ölstand E anzeigt. Eine Vermeidung einer Überfüllung erfordert somit die stete Beobachtung des Pegels des Kompressoröls C im Aufnahmevolumen des Kompressorgehäuses A über das Ölschauglas D während eines Einfüllvorgangs. Ein Beschädigung und/oder Verschmutzung des Ölschauglases sowie subjektive Blickwinkel bei der Beobachtung und Lichtverhältnisse können dabei Einfluss auf die Ablesemöglichkeit und Ablesegenauigkeit haben.

Zur Reduzierung oder auch Vermeidung des Risikos einer Überfüllung zeigt **Figur 2** eine schematische Querschnittsdarstellung einer Kompressorölaufnahmevorrichtung 10 gemäß einer ersten exemplarischen Ausführungsform der vorliegenden Erfindung. Die Kompressorölaufnahmevorrichtung 10 weist ein Kompressorgehäuse 1 auf, das ein Aufnahmevolumen für ein Kompressoröl 3 ausbildet. Zudem weist die Kompressorölaufnahmevorrichtung 10 einen Öleinfüllstutzen 2 auf, der integral mit dem Kompressorgehäuse 1 ausgebildet ist. Durch die integrale Ausbildung des Öleinfüllstutzens 2 mit dem Kompressorgehäuse 1 ist eine Verbindungsdichtigkeit verbessert, so dass über die Anbindung das Risiko einer Leckage, insbesondere im Hinblick auf Entweichen von Luft, vermindert bzw. vermieden wird. In Richtung der Steighöhe des Kompressoröls 3 im Aufnahmevolumen weist der Öleinfüllstutzen 2 eine dem Pegel des Kompressoröls 3 zugewandte Auslassöffnung 22 und eine dem Pegel des Kompressoröls 3 abgewandte Einfüllöffnung 21 auf. Die Einfüllöffnung 21 schließt hier exemplarisch mit der dem Aufnahmevolumen für das Kompressoröl 3 abgewandten Seite des Kompressorgehäuses 1 bündig ab. In alternativen Ausführungsformen kann die Einfüllöffnung 21 bzw. der Bereich des Öleinfüllstutzens 2 mit der Einfüllöffnung 21 aber auch auf einer dem Aufnahmevolumen abgewandten Seite des Kompressorgehäuses 1 vorstehen. Die Einfüllöffnung 21 ist über einen Deckel (nicht gezeigt) verschließbar. Der Öleinfüllstutzen 2 erstreckt sich in Richtung der Schwerkraft bzw. in Richtung der Steighöhe des Pegels des Kompressoröls 3 in das Aufnahmevolumen des Kompressorgehäuses 1 hinein. Die Auslassöffnung 22 ist somit in Richtung der Schwerkraft unterhalb der Einfüllöffnung 21 angeordnet. Zudem ist die Auslassöffnung 22 in Richtung der Schwerkraft zwischen einer oberen und unteren durch das Kompressorgehäuse 1 gebildeten Volumenbegrenzung des Aufnahmevolumens für das Kompressoröl 3 angeordnet. Die Position der Auslassöffnung 22 in Richtung der Schwerkraft korrespondiert zu einem maximalen Ölstand 5, der vorbestimmt ist, um eine Überfüllung zu vermeiden. Das Kompressorgehäuse 1 der Kompressorölaufnahmevorrichtung 10 weist zudem ein Ölschauglas 4 als Anzeigevorrichtung für den Pegel des Kompressoröls 3 im Aufnahmevolumen auf. Das Ölschauglas 4 erstreckt sich in Richtung der Steighöhe des Pegels des Kompressoröls 3 im Aufnahmevolumen über einen Bereich, der einen minimalen Ölstand 6 und den maximalen Ölstand 5 überdeckt. Der minimale Ölstand 6 und der maximale Ölstand 5 korrespondieren zu einer entsprechenden Skalierung auf dem Ölschauglas 4. In alternativen Ausführungsformen können weitere Skalierungsangaben auf dem Ölschauglas 4 vorgesehen sein. Über das Ölschauglas 4, das sich auch über den maximalen Ölstand 5 hinaus erstreckt, ist auch die Position der Auslassöffnung 22 erkennbar.

Wird nun beispielsweise im Rahmen eines Wartungsvorgangs ein minimaler Ölstand abgelesen, wird Kompressoröl 3 über die Einfüllöffnung 21 des Öleinfüllstutzens 2 nachgefüllt. Entsprechend steigt der Pegel des Kompressoröls 3 im Aufnahmevolumen des Kompressorgehäuses 1. Das durch das Kompressoröl 3 im Aufnahmevolumen verdrängte Luftvolumen kann über den Öleinfüllstutzen entweichen, bis der Pegel des Kompressoröls 3 soweit angestiegen ist, dass die Auslassöffnung 22 von dem Kompressoröl überdeckt wird. Dadurch wird das verbleibende Luftvolumen im Kompressorgehäuse 1 zwischen der Auslassöffnung 22 und dem Kompressorgehäuse 1 eingeschlossen und bildet ein Luftpolster 7 aus. Das Luftpolster 7 verhindert einen weiteren Anstieg des Pegels des Kompressoröls 3 im Aufnahmevolumen. Da die Auslassöffnung 22 hier auf der Höhe des maximalen Ölstands 5 angeordnet ist, wird somit eine weitere Befüllung des Aufnahmevolumens mit dem Kompressoröl 3 und somit eine Überfüllung vermieden. Das Kompressoröl 3 kann dann nur in dem Öleinfüllstutzen 2 selbst ansteigen, wie dies durch den Pfeil angedeutet ist. Dieser weist zwischen der Einfüllöffnung 21 und der Auslassöffnung 22 eine vorbestimmte Höhe auf, so dass ein Anstieg im Öleinfüllstutzen 2 oder das Erreichen des maximalen Ölstands 5 mit ausreichender Toleranz erkannt werden kann, ohne dass gleich Kompressoröl 3 aus der Einfüllöffnung 21 austritt.

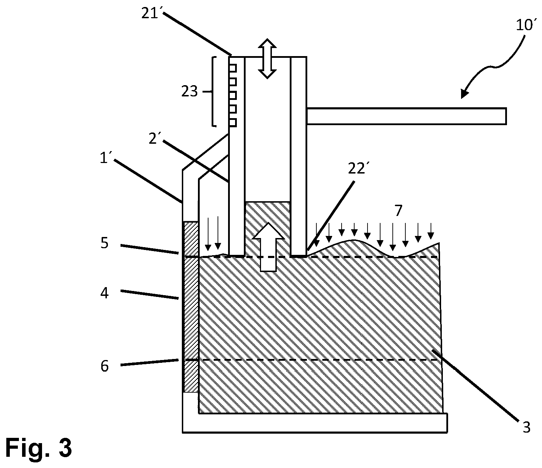

**Figur 3** zeigt eine schematische Querschnittsdarstellung einer Kompressorölaufnahmevorrichtung 10' gemäß einer zweiten exemplarischen Ausführungsform der vorliegenden Erfindung. Die zweite Ausführungsform unterscheidet sich von der ersten Ausführungsform in der Ausgestaltung des Öleinfüllstutzens 2' und das dazu korrespondierende Kompressorgehäuse 1'. Im Übrigen ist die Kompressorölaufnahmevorrichtung 10' der zweiten Ausführungsform analog zur Kompressorölaufnahmevorrichtung 10 der ersten Ausführungsform aufgebaut, so dass diesbezüglich gleiche Bezugszeichen verwendet und eine diesbezügliche Beschreibung gemäß der ersten Ausführungsform auf die zweite Ausführungsform übertragbar ist.

Der Öleinfüllstutzen 2' der Kompressorölaufnahmevorrichtung 10' ist in der zweiten Ausführungsform nicht integral mit dem Kompressorgehäuse 1' ausgebildet, sondern in das Kompressorgehäuse 1' über eine Gewindeverbindung (nicht gezeigt) einschraubbar. Entsprechend kann die Position der Auslassöffnung 22' des Öleinfüllstutzens 2' über die Einschraubtiefe eingestellt werden, wie dies durch den Doppelpfeil im Bereich der Einfüllöffnung 21' angedeutet ist. Somit ist auch der maximale Ölstand 5 bzw. eine maximale Pegelhöhe des Kompressoröls 3 im Aufnahmevolumen des Kompressorgehäuses 1' einstellbar. Die Gewindeverbindung kann zusätzliche Dichtmittel aufweisen, um ein Entweichen von Luft aus dem zwischen dem Kompressorgehäuse 1' einerseits und dem eingefüllten Kompressoröl bei Überdeckung mit der Auslassöffnung 22' eingeschlossenen Luftvolumen 7 zu verhindern. In alternativen Ausführungsformen können auch anstelle einer Schraubverbindung auch andere Positionseinstellmechanismen, wie Klemmschellen oder dergleichen, vorgesehen werden.

Der Öleinfüllstutzen 2' weist zudem in einem von der dem Aufnahmevolumen abgewandten Seite des Kompressorgehäuses 1' je nach Position vorstehenden Bereich eine Skalierung 23 als Positionsanzeigevorrichtung für den Öleinfüllstutzen 2' auf. Die gerade nicht durch das Kompressorgehäuse 1' verdeckte Skalierung gibt dann die jeweilige Einschraubtiefe an. In alternativen Ausführungsformen kann die Positionsanzeigevorrichtung auch über einen Abstandsmesser vorgesehen sein, der einen Abstand in Steighöhe des Pegels zwischen der Auslassöffnung 22' und einem Referenzpunkt, beispielsweise einer der Auslassöffnung in Steighöhe gegenüberliegenden Kompressorgehäusewandung detektiert. Das Abstandssignal kann von einer Anzeigevorrichtung als analoger Abstandswert oder durch verschiedenfarbige Leuchtanzeigen wiedergegeben werden.

Die Erfindung ist nicht auf die beschriebenen Ausführungsformen beschränkt. Auch wenn sich beispielwese in den vorstehend beschriebenen Ausführungsformen der Öleinfüllstutzen senkrecht zum Ölpegel erstreckt, kann der Öleinfüllstutzen hierzu auch geneigt verlaufen.

### BEZUGSZEICHENLISTE

- 1, 1': Kompressorgehäuse
- 2, 2': Öleinfüllstutzen
- 3: Kompressoröl
- 4: Ölschauglas (Füllstandsanzeiger)
- 5: maximaler Ölstand
- 6: minimaler Ölstand
- 7: Luftpolster (Luftvolumen)
- 10, 10': Kompressorölaufnahmevorrichtung
- 21, 21': Einfüllöffnung (Öleinfüllstutzen)
- 22, 22': Auslassöffnung (Öleinfüllstutzen)
- 23: Skalierung (Positionsanzeigevorrichtung)
- A: Kompressorgehäuse
- B: Öleinfüllöffnung
- C: Kompressoröl
- D: Ölschauglas (Füllstandsanzeiger)
- E: maximaler Ölstand
- F: minimaler Ölstand

## Patentansprüche

1. Kompressorölaufnahmevorrichtung (10, 10') für ein Kompressorsystem zur Befüllung mit einem Kompressoröl (3) zur Weiterleitung in das Kompressorsystem, aufweisend:
ein Gehäuse (1, 1'), das ein Aufnahmevolumen für das Kompressoröl (3) ausbildet, und
einen Öleinfüllstutzen (2, 2') mit einer Einfüllöffnung (21, 21') auf einer dem Aufnahmevolumen abgewandten Seite und einer Auslassöffnung (22, 22') auf einer dem Aufnahmevolumen zugewandten Seite,
**dadurch gekennzeichnet, dass** der Öleinfüllstutzen (2, 2') eine Gehäuseöffnung zum Befüllen des Aufnahmevolumens mit dem Kompressoröl (3) ausbildet und die Auslassöffnung (22, 22') derart angeordnet ist, dass durch Befüllen des Aufnahmevolumens ein vom Gehäuse (1, 1') einerseits und dem eingefüllten Kompressoröl (3) andererseits eingeschlossenes Luftvolumen (7) im Aufnahmevolumen ausbildbar ist.

2. Die Kompressorölaufnahmevorrichtung (10, 10') nach Anspruch 1, wobei sich der Öleinfüllstutzen (2, 2') zumindest teilweise in das eingeschlossene Luftvolumen (7) hinein erstreckt.

3. Die Kompressorölaufnahmevorrichtung (10, 10') nach einem der Ansprüche 1 oder 2, wobei die Einfüllöffnung (21, 21') und die Auslassöffnung (22, 22') in Richtung einer Steighöhe des Kompressoröls (3) im Aufnahmevolumen in unterschiedlichen Höhen angeordnet sind und der Abstand der Einfüllöffnung (21, 21') zur jeweiligen Pegelhöhe des Kompressoröls (3) im Aufnahmevolumen zumindest bis zum Erreichen eines vorgesehenen maximalen Ölstands (5) größer ist als der Abstand der Auslassöffnung (22, 22') zu dieser jeweiligen Pegelhöhe.

4. Die Kompressorölaufnahmevorrichtung (10, 10') nach einem der vorherigen Ansprüche, wobei die Position der Auslassöffnung (22, 22') zu dem maximalen Ölstand (5) korrespondiert.

5. Die Kompressorölaufnahmevorrichtung (10') nach einem der vorherigen Ansprüche, wobei die Position der Auslassöffnung (22') einstellbar ist.

6. Die Kompressorölaufnahmevorrichtung (10') nach Anspruch 5, wobei der Öleinfüllstutzen (2') zumindest in einem Bewegungsanteil in Richtung der Steighöhe des Kompressoröls (3) im Aufnahmevolumen bewegbar ist.

7. Die Kompressorölaufnahmevorrichtung (10') nach Anspruch 6, wobei der Öleinfüllstutzen (2') eine Positionsanzeigevorrichtung (23) aufweist, die dazu konfiguriert ist, eine Position der Auslassöffnung (22') anzuzeigen.

8. Die Kompressorölaufnahmevorrichtung (10') nach Anspruch 7, wobei die Einfüllöffnung (21') zumindest bis zum Erreichen einer vorbestimmten Bewegungstiefe des Ölleinfüllstutzens (2') in das Aufnahmevolumen hinein über eine dem Aufnahmevolumen abgewandte Seite des Gehäuses (1') vorsteht und in diesem vorstehenden Bereich eine Skalierung (23) als Positionsanzeigevorrichtung (23) aufweist.

9. Die Kompressorölaufnahmevorrichtung (10, 10') nach einem der vorherigen Ansprüche, wobei die Kompressorölaufnahmevorrichtung (10, 10') einen Füllstandsanzeiger (4) aufweist, der zumindest einen minimalen Ölstand (6) und/oder den maximalen Ölstand (5) anzeigt.

10. Die Kompressorölaufnahmevorrichtung (10, 10') nach Anspruch 9, wobei der Füllstandsanzeiger (4) als zumindest ein Ölschauglas (4) im Gehäuse (1, 1') ausgebildet ist, das sich zumindest im Bereich des minimalen Ölstands (6) und/oder des maximalen Ölstands (5) in Richtung der Steighöhe des Kompressoröls (3) im Aufnahmevolumen erstreckt.

11. Die Kompressorölaufnahmevorrichtung (10, 10') nach Anspruch 10, wobei das Ölschauglas (4) derart angeordnet und/oder dimensioniert ist, dass über das Ölschauglas (4) auch die Position der Auslassöffnung (22, 22') des Druckstutzens (2, 2') im Aufnahmevolumen erkennbar ist.

12. Die Kompressorölaufnahmevorrichtung (10, 10') nach Anspruch 10 oder 11, wobei das Ölschauglas (4) und/oder ein daran angrenzender Bereich des Gehäuses (1, 1') eine Skalierung (5, 6) aufweist.

13. Kompressorsystem mit einer Kompressorölaufnahmevorrichtung (10, 10') nach einem der Ansprüche 1 bis 12, wobei das Aufnahmevolumen für das Kompressoröl (3) zumindest teilweise durch einen Ölsumpf des Kompressorsystems ausgebildet wird.

14. Das Kompressorsystem nach Anspruch 13, wobei das Kompressorsystem einen Schraubenkompressor aufweist.

## Claims

1. Compressor oil receiving device (10, 10') for a compressor system to be filled with a compressor oil (3) for transferring into the compressor system, comprising:
a housing (1, 1') which forms a receiving volume for the compressor oil (3), and
an oil-filling nozzle (2, 2') with a filling opening (21, 21') on a side facing away from the receiving volume and an outlet opening (22, 22') on a side facing the receiving volume,
**characterized in that** the oil-filling nozzle (2, 2') forms a housing opening for filling the receiving volume with the compressor oil (3) and the outlet opening (22, 22') is arranged such that by filling the receiving volume an air volume (7), which is enclosed by the housing (1, 1') on the one hand and the compressor oil (3) that has been filled on the other hand, can be formed in the receiving volume.

2. Compressor oil receiving device (10, 10') according to claim 1, wherein the oil-filling nozzle (2, 2') extends at least partially into the enclosed air volume (7).

3. Compressor oil receiving device (10, 10') according to any one of claims 1 or 2, wherein the filling opening (21, 21') and the outlet opening (22, 22') are arranged at different heights in the direction of a rise height of the compressor oil (3) in the receiving volume, and the distance of the filling opening (21, 21') from the respective level height of the compressor oil (3) in the receiving volume, at least until an intended maximum oil level (5) has been reached, is greater than the distance of the outlet opening (22, 22') from this respective level height.

4. Compressor oil receiving device (10, 10') according to any one of the preceding claims, wherein the position of the outlet opening (22, 22') corresponds to the maximum oil level (5).

5. Compressor oil receiving device (10') according to any one of the preceding claims, wherein the position of the outlet opening (22') is adjustable.

6. Compressor oil receiving device (10') according to claim 5, wherein the oil-filling nozzle (2') can be moved at least by a movement amount in the direction of the rise height of the compressor oil (3) in the receiving volume.

7. Compressor oil receiving device (10') according to claim 6, wherein the oil-filling nozzle (2') has a position indicating device (23), which is configured to indicate a position of the outlet opening (22').

8. Compressor oil receiving device (10') according to claim 7, wherein the filling opening (21') projects beyond a side of the housing (1') facing away from the receiving volume at least until a predetermined movement depth of the oil filling nozzle (2') into the receiving volume has been reached, and has a scale (23) as a position indicating device (23) in this projecting region.

9. Compressor oil receiving device (10, 10') according to any one of the preceding claims, wherein the compressor oil receiving device (10, 10') has a filling level indicator (4), which indicates at least a minimum oil level (6) and/or the maximum oil level (5).

10. Compressor oil receiving device (10, 10') according to claim 9, wherein the filling level indicator (4) is configured as at least an oil inspection glass (4) in the housing (1, 1'), which extends at least in the region of the minimum oil level (6) and/or the maximum oil level (5) in the direction of the rise height of the compressor oil (3) in the receiving volume.

11. Compressor oil receiving device (10, 10') according to claim 10, wherein the oil inspection glass (4) is arranged and/or dimensioned such that through the oil inspection glass (4) the position of the outlet opening (22, 22') of the pressure nozzle (2, 2') in the receiving volume can be identified.

12. Compressor oil receiving device (10, 10') according to claim 10 or 11, wherein the oil inspection glass (4) and/or a bordering region of the housing (1, 1') has/have a scale (5, 6).

13. Compressor system having a compressor oil receiving device (10, 10') according to any one of claims 1 to 12, wherein the receiving volume for the compressor oil (3) is configured at least partly by an oil sump of the compressor system.

14. Compressor system according to claim 13, wherein the compressor system includes a screw compressor.

## Revendications

1. Dispositif de réception d'huile de compresseur (10, 10') pour un système de compresseur à remplir avec une huile de compresseur (3) pour l'acheminement dans le système de compresseur, présentant :
un boîtier (1, 1') qui forme un volume de réception pour l'huile de compresseur (3), et
une tubulure de remplissage d'huile (2, 2') avec une ouverture de remplissage (21, 21') sur un côté opposé au volume de réception et une ouverture de sortie (22, 22') sur un côté tourné vers le volume de réception,
**caractérisé en ce que** la tubulure de remplissage d'huile (2, 2') forme une ouverture de boîtier pour remplir le volume de réception avec l'huile de compresseur (3), et l'ouverture de sortie (22, 22') est disposée de sorte qu'un volume d'air (7) enfermé par le boîtier (1, 1') d'une part et l'huile de compresseur (3) remplie d'autre part peut être formé en remplissant le volume de réception.

2. Dispositif de réception d'huile de compresseur (10, 10') selon la revendication 1, dans lequel la tubulure de remplissage d'huile (2, 2') s'étend au moins partiellement dans le volume d'air (7) enfermé.

3. Dispositif de réception d'huile de compresseur (10, 10') selon l'une quelconque des revendications 1 ou 2, dans lequel l'ouverture de remplissage (21, 21') et l'ouverture de sortie (22, 22') sont disposées à différentes hauteurs en direction d'une hauteur de montée de l'huile de compresseur (3) dans le volume de réception, et la distance entre l'ouverture de remplissage (21, 21') et la hauteur respective de l'huile de compresseur (3) dans le volume de réception est supérieure à la distance entre l'ouverture de sortie (22, 22') et cette hauteur respective, au moins jusqu'à atteindre un niveau d'huile maximal (5) prévu.

4. Dispositif de réception d'huile de compresseur (10, 10') selon l'une quelconque des revendications précédentes, dans lequel la position de l'ouverture de sortie (22, 22') correspond au niveau d'huile maximal (5).

5. Dispositif de réception d'huile de compresseur (10') selon l'une quelconque des revendications précédentes, dans lequel la position de l'ouverture de sortie (22') est réglable.

6. Dispositif de réception d'huile de compresseur (10') selon la revendication 5, dans lequel la tubulure de remplissage d'huile (2') est mobile au moins dans une partie de mouvement en direction de la hauteur de montée de l'huile de compresseur (3) dans le volume de réception.

7. Dispositif de réception d'huile de compresseur (10') selon la revendication 6, dans lequel la tubulure de remplissage d'huile (2') présente un dispositif d'indication de position (23) qui est configuré pour indiquer une position de l'ouverture de sortie (22').

8. Dispositif de réception d'huile de compresseur (10') selon la revendication 7, dans lequel l'ouverture de remplissage (21') fait saillie au-delà d'un côté du boîtier (1') opposé au volume de réception au moins jusqu'à atteindre une profondeur de déplacement prédéterminée de la tubulure de remplissage d'huile (2') dans le volume de réception et présente dans cette zone en saillie une graduation (23) en tant que dispositif d'indication de position (23).

9. Dispositif de réception d'huile de compresseur (10, 10') selon l'une quelconque des revendications précédentes, dans lequel le dispositif de réception d'huile de compresseur (10, 10') présente un indicateur de niveau de remplissage (4) qui indique au moins un niveau d'huile minimal (6) et/ou le niveau d'huile maximal (5).

10. Dispositif de réception d'huile de compresseur (10, 10') selon la revendication 9, dans lequel l'indicateur de niveau de remplissage (4) est conçu en tant qu'au moins un regard à huile (4) dans le boîtier (1, 1') qui s'étend au moins dans la région du niveau d'huile minimal (6) et/ou du niveau d'huile maximal (5) en direction de la hauteur de montée de l'huile de compresseur (3) dans le volume de réception.

11. Dispositif de réception d'huile de compresseur (10, 10') selon la revendication 10, dans lequel le regard à huile (4) est disposé et/ou dimensionné de sorte que la position de l'ouverture de sortie (22, 22') de la tubulure de pression (2, 2') dans le volume de réception soit également identifiable à travers le regard à huile (4).

12. Dispositif de réception d'huile de compresseur (10, 10') selon la revendication 10 ou 11, dans lequel le regard à huile (4) et/ou une zone adjacente du boîtier (1, 1') présente une graduation (5, 6).

13. Système de compresseur avec un dispositif de réception d'huile de compresseur (10, 10') selon l'une quelconque des revendications 1 à 12, dans lequel le volume de réception pour l'huile de compresseur (3) est formé au moins partiellement par un carter d'huile du système de compresseur.

14. Système de compresseur selon la revendication 13, dans lequel le système de compresseur présente un compresseur à vis.
